# EUROPÄISCHE PATENTSCHRIFT

(11) **EP 4 413 418 B1**
(45) Veröffentlichungstag und Bekanntmachung des Hinweises auf die Patenterteilung: **27.05.2026**
(21) Anmeldenummer: 22798145.3
(22) Anmeldetag: 06.10.2022
(51) Int. Cl.: G02F 1/13, G02F 1/1343, G02F 1/1362

(54) **ANZEIGEVORRICHTUNG, INSBESONDERE FÜR EIN FAHRZEUG, MIT UMSCHALTBAREM TEILUNGS- UND PRIVAT-MODUS**
DISPLAY DEVICE, IN PARTICULAR FOR A VEHICLE, WITH SWITCHABLE SHARING AND PRIVATE MODES
DISPOSITIF D'AFFICHAGE, EN PARTICULIER POUR UN VÉHICULE, À MODE PARTAGÉ ET PRIVÉ COMMUTABLE

(30) Priorität: 07.10.2021 DE 102021126024; 03.06.2022 DE 102022114155
(43) Veröffentlichungstag der Anmeldung: 14.08.2024
(73) Patentinhaber: AUO Mobility Solutions Germany GmbH, 59557 Lippstadt (DE)
(72) Erfinder: SÁNCHEZ CASTILLO, Alberto, 59557 Lippstadt (DE); HOFMAN, Willem, 59557 Lippstadt (DE)
(74) Vertreter: dompatent
(86) Internationale Anmeldenummer: PCT/EP2022/077785
(87) Internationale Veröffentlichungsnummer: WO 2023/057553

(56) Entgegenhaltungen:
- US-A1- 2010 128 189
- US-A1- 2013 265 514
- US-A1- 2018 088 366
- US-A1- 2020 073 157

## Beschreibung

Die Erfindung betrifft eine Anzeigevorrichtung insbesondere zur Verwendung in einem Fahrzeug, die wahlweise entweder im Teilungs-Modus oder im Privat-Modus betrieben werden kann.

Die Anzahl und die Größe von Displays in insbesondere Fahrzeugen nimmt kontinuierlich zu. So existieren heute bereits Fahrzeugkonzepte, bei denen sich in bzw. auf der Instrumententafel Displays auch für den Beifahrer befinden, und zwar entweder als zu anderen Displays separaten Displays oder aber als Beifahrerteil eines Door-to-Door-Displays.

Schon seit geraumer Zeit existieren Maßnahmen, um die freie Einsehbarkeit von auf einer Anzeigefläche angezeigter Information für Dritte einzuschränken. Im Idealfall soll ausschließlich der intendierte Betrachter den Bildschirminhalt erfassen können, während in der Nachbarschaft befindliche Personen die angezeigte Information nicht lesen bzw. erkennen oder wahrnehmen können sollten.

In US-A-2020/0073157 ist ein LCD-Display mit steuerbarem Einsichtswinkelbereich beschrieben, das versehen ist mit:
- einem eine Vielzahl von Pixeln aufweisenden LCD-Display mit einer transparenten Trägerschicht, auf der pro Pixel eine Gruppe von Elektroden und ferner elektronische Bauteile zur Ansteuerung der Elektroden angeordnet sind,
- einer eine Anzeigefläche bildenden transparenten Abdeckschicht mit einer Flüssigkristallschicht zwischen der Trägerschicht und der Abdeckschicht,
- wobei jede Gruppe von Elektroden eine mit einem Massepotential verbindbare erste Elektrodenfläche sowie eine dritte Elektrode aufweist, die elektrisch isoliert von der ersten Elektrodenfläche angeordnet und mit einem Betriebspotential verbindbar ist, und
- einer unter anderem die elektronischen Bauteile aufweisenden Ansteuereinheit zum Verbinden der dritten Elektrode jedes Pixels oder ausgewählter Pixel mit dem Betriebspotential und zum Verbinden der ersten Elektrodenflächen jedes Pixels oder ausgewählter Pixel mit dem Massepotential in einem Teilungs-Modus und in einem Privat-Modus,
- womit auf der Anzeigefläche des LCD-Displays angezeigte Information bei Betrachtung der Anzeigefläche aus einer Blickrichtung im Teilungs-Modus kontrastreicher sichtbar ist als im Privat-Modus.

Ein weiteres Beispiel für ein LCD-Display mit steuerbarem Einsichtwinkelbereich ist in US-A-2013/0265514 beschrieben.

Als besonders leistungsstark haben sich LCD-Displays herausgestellt, die über die sogenannte In-Plane-Switching-(IPS)-Technologie verfügen.

Aufgabe der Erfindung ist es, eine Anzeigevorrichtung, insbesondere für ein Fahrzeug, zu schaffen, die eine elektronische Möglichkeit des wahlweisen Betriebs im Teilungs-Modus oder im Privat-Modus ermöglicht und über IPS-Technologie verfügt.

Gemäß der Erfindung wird zur Lösung dieser Aufgabe eine Anzeigevorrichtung, insbesondere für ein Fahrzeug, vorgeschlagen, die versehen ist mit
- einem eine Vielzahl von Pixeln aufweisenden LCD-Display mit einer transparenten Trägerschicht, auf der pro Pixel eine Gruppe von Elektroden und ferner elektronische Bauteile zur Ansteuerung der Elektroden angeordnet sind, einer eine Anzeigefläche bildenden transparenten Abdeckschicht und mit einer Flüssigkristallschicht zwischen der Trägerschicht und der Abdeckschicht,
- wobei jede Gruppe von Elektroden eine mit einem Massepotential verbindbare erste Elektrodenfläche und zwei ebenfalls mit dem Massepotential verbindbare zweite Elektrodenflächen aufweist, die voneinander sowie gegenüber der ersten Elektrodenfläche elektrisch isoliert und nebeneinander sowie gemeinsam fluchtend mit der ersten Elektrodenfläche oberhalb oder unterhalb dieser angeordnet sind,
- wobei jede Gruppe von Elektroden eine dritte Elektrode aufweist, die elektrisch isoliert von den ersten und zweiten Elektrodenflächen angeordnet und mit einem Betriebspotential verbindbar ist, und
- einer unter anderem die elektronischen Bauteile aufweisenden Ansteuereinheit zum im Teilungs-Modus zu erfolgenden Verbinden der dritten Elektrode jedes Pixels oder ausgewählter Pixel mit dem Betriebspotential und zum Verbinden der ersten Elektrodenflächen jedes Pixels oder ausgewählter Pixel mit dem Massepotential sowie zum im Privat-Modus zu erfolgenden Verbinden der ersten Elektrodenfläche und zusätzlich einer der beiden zweiten Elektrodenflächen jedes Pixels oder ausgewählter Pixel mit dem Massepotential,
- womit auf der Anzeigefläche des LCD-Displays angezeigte Information bei Betrachtung der Anzeigefläche aus einer Blickrichtung, die einer der beiden zweiten Elektrodenflächen sämtlicher Pixel zugewandt ist, im Teilungs-Modus kontrastreicher sichtbar ist als im Privat-Modus, in dem die der besagten Blickrichtung abgewandte eine der beiden zweiten Elektrodenflächen jedes Pixels oder ausgewählter Pixel mit dem Massepotential verbunden ist, d.h. dass die der besagten Blickrichtung abgewandte andere der beiden zweiten Elektrodenflächen jedes Pixels oder ausgewählter Pixel nicht mit dem Massepotential verbunden ist.

Nach der Erfindung weist die Anzeigevorrichtung ein LCD-Display mit IPS-Technologie auf. Dabei ist die Minus-Elektrode jedes Pixels erfindungsgemäß mehrteilig ausgeführt. Durch selektive unterschiedliche Ansteuerung der Einzelelektroden der jeweils mehrteilig ausgeführten einen Elektroden jedes Pixels des LCD-Displays in IPS-Technologie kann der Kontrast beeinflusst werden, und zwar bei Betrachtung der Anzeigefläche aus derjenigen Blickrichtung, der die jeweilige nicht angesteuerte Elektrode zugewandt ist.

Bei dem erfindungsgemäßen Anzeigevorrichtungskonzept wird als Plus-Elektrode das von LCD-Displays in IPS-Technologie bekannte Elektrodendesign eingesetzt, das zwei Kammstrukturen aufweist, wobei die ersten Abschnitte beider Kammstrukturen elektrisch miteinander verbunden sind und wobei die von den ersten Abschnitten jeweils abstehenden zweiten Abschnitte wechselweise aufeinanderfolgen, d.h. wechselweise nebeneinanderliegen. Die Minus-Elektrode ist nun mehrteilig ausgeführt. Sie umfasst eine Minus-Elektrodenfläche, die im Wesentlichen die Fläche des Pixels ausfüllt. Über oder unter dieser ersten Minus-Elektrodenfläche existiert elektrisch isoliert eine weitere zweigeteilte Minus-Elektrodenfläche mit zwei oder mehr Minus-Elektrodenteilflächen, die nebeneinander angeordnet sind und voneinander elektrisch isoliert sind. Das elektrische Feld, das sich innerhalb eines Pixels in der Flüssigkristallschicht ausbildet, ist nunmehr durch die Wahl der angesteuerten Minus-Elektrodenfläche bzw. Minus-Elektrodenteilflächen beeinflussbar, und zwar sowohl hinsichtlich seiner Intensität bzw. Stärke als auch hinsichtlich seiner Homogenität über die Fläche des Pixels betrachtet. Wird nämlich nur eine der beiden Minus-Elektrodenteilflächen angesteuert, so ergibt sich eine Asymmetrie im elektrischen Feld, indem dessen Stärke im Bereich der nicht angesteuerten Minus-Elektrodenteilfläche geringer ist als im übrigen Bereich des Pixels. Das wirkt sich auf sowohl die Lichttransmission als auch den Kontrast aus, und zwar bei Betrachtung der Anzeigefläche aus derjenigen Blickrichtung, der die nicht angesteuerte zweite Minus-Elektrodenteilfläche zugewandt ist.

Die Erfindung wird nachfolgend anhand eines Ausführungsbeispiels sowie unter Bezugnahme auf die Zeichnung näher erläutert. Im Einzelnen zeigen dabei:
- Fig. 1: schematische Querschnitts- und Draufsicht-Darstellungen des Standarddesigns eines LCD-Pixels in IPS-Technologie,
- Fig. 2: Querschnitts- und Draufsicht-Ansichten auf eine Modifikation des Pixeldesigns gemäß einem Ausführungsbeispiel der Erfindung bei Ansteuerung für den Teilungs-Modus,
- Fig. 3: das Pixeldesign gemäß dem Ausführungsbeispiel der Erfindung jedoch bei Ansteuerung für den Privat-Modus, schematisch in Querschnitts- und Draufsicht-Darstellung,
- Fig. 4: eine Gegenüberstellung der Sichtbarkeitsverhältnisse für Fahrer und Beifahrer in den Betriebsarten des dem Beifahrer zugeordneten Display im Teilungs-Modus (links in Fig. 4) und im Privat-Modus (rechts in Fig. 4) und
- Fig. 5: eine Gegenüberstellung der Sichtbarkeitsverhältnisse für Fahrer und Beifahrer in den Betriebsarten des dem Beifahrer zugeordneten Display im Teilungs-Modus (links in Fig. 5) und im Privat-Modus (rechts in Fig. 5) unter zusätzlicher Reduktion der Hinterleuchtungslichtstärke des dem Beifahrer zugeordneten Displays im Privat-Modus-Betrieb.

Sichtschutztechnologien für die Einschränkung/Verhinderung der Lesbarkeit von auf einem Display angezeigter Inhalte für Dritte sind bereits seit vielen Jahren auf dem Markt, um die Sichtbarkeit des Displays nur in einer bevorzugten Richtung zu ermöglichen, während die Informationen in allen anderen Richtungen nicht sichtbar sind. Die bekannten Technologien basieren auf sowohl statischem Sichtschutz als auch schaltbarem Sichtschutz. Die statische Option verursacht den Sichtschutzeffekt durch Implementierung von Lichtsteuerungssystemen (d.h. Light Control Film, Prismen etc.) in der Hinterleuchtungseinheit des Displays. Für schaltbaren Sichtschutz wurde das Design der Hinterleuchtung so erweitert, dass sowohl die Ansteuerung von Beleuchtung mit normalem Licht als auch Sichtschutzbeleuchtung unterstützt wird. Diese Ansätze verringern die Leuchtdichte über den Blickwinkel, jedoch kann bei dunklen Raumverhältnissen die Sichtbarkeit des Bildes aufgrund der Tageslicht-Rekalibrierung des menschlichen Auges auf niedrige Lichtstärke nicht verringert werden. In diesem Fall ist das Bild immer noch sichtbar, auch wenn die Leuchtdichte nur 0,3 cd/m² beträgt, was zu einem verringerten Grad an Sichtschutzleistung führt.

Bei Anwendungen dieser Art von Sichtschutzkonzepten in einem Fahrzeug bleibt für den Fahrer Information auf einem dem Beifahrer zugeordneten separaten Display oder Displaybereich eines z.B. Door-to-Door-Displays weiterhin zumindest schwach erkennbar, was ihn ablenken könnte und damit zur Entstehung von Gefahrensituationen führen kann. Die Möglichkeit des Umschaltens auf einen verbesserten Privat-Modus ist also insbesondere bei Automobil-Anwendungen von sicherheitsrelevanter Bedeutung.

Im Gegensatz dazu liegt bei anderen Ansätzen der Fokus hauptsächlich nur auf dem Sichtschutz auf Display-Panels, indem das Pixeldesign in verschiedene elektrische Ansteuerungsmodi umgewandelt wird. Bei dieser Art von Ansatz kann ein In-Cell-Display nicht implementiert werden. Bei diesen Ansätzen wird das Leuchtdichten- oder Kontrastverhältnis verringert, jedoch kann die Verringerung der Sichtbarkeit des Bildes nur erreicht werden, wenn ein sehr starker Dimmfaktor in der Hinterleuchtung verwendet wird, was sich drastisch auf die Bildqualität für den intendierten Benutzer auswirkt.

Diese auf dem Markt befindlichen Ansätze eignen sich in erster Linie für die Anwendung auf dem Endverbrauchermarkt und sind sehr effektiv, um den Sichtschutzeffekt unter normalen Lichtverhältnissen zu erzeugen. Wenn jedoch das Umgebungslicht relativ schwach ist, wie es bei Nachtfahrten mit einem Fahrzeug der Fall ist, ist der Sichtschutzeffekt nicht so effektiv, da sich das Auge an niedrige Lichtstärken neu anpasst.

Diese Ansätze haben Nachteile in Bezug auf die optische Leistung, da die umschaltbare, für den Privat-Modus optimierte Leistung die Leistung des Displays im normalen Teilungsbetrieb drastisch reduziert. Dies ist auch im Fahrzeug ein Nachteil. Aufgrund der Anzahl der in der Instrumententafel des Fahrzeugs integrierten Displays müssen diese so abgestimmt werden, dass sie eine ähnliche optische Leistung bereitstellen. Eine Sichtschutztechnologie, die nicht in der Lage ist, im Teilungs-Modus eine ähnliche optische Leistung zu erbringen wie die übrigen Displays im Fahrzeug, ist für Automobilanwendungen möglicherweise nicht geeignet.

Mit der Erfindung wird eine Lösung vorgestellt, um den Mehrwert eines Displays im Automobilbereich zu erhalten, kombiniert mit einem verbesserten Sichtschutzdisplayeffekt bei Anwendungen mit diskreten sowie mit In-Cell-Touch-Technologien. Dabei werden durch das erfindungsgemäße Pixeldesign die Display-Leistung und In-Cell-Kompatibilität des Designs auf der Grundlage eines IPS-ähnlichen Pixeldesigns garantiert. Das erfindungsgemäße vorgeschlagene Dualmodus-Pixeldesign hat insbesondere bezüglich der Anwendung in einem Fahrzeug die folgenden Vorzüge:
- Das Pixel ist im Teilungs-Modus IPS-ähnlich (normaler bzw. erster Pixelansteuerungsmodus). Dadurch kann die im Automobilbereich geforderte hohe optische Leistung erreicht werden.
- Die Pixelansteuerung kann in den Privat-Modus (zweiter Pixelansteuerungsmodus) umgeschaltet werden, um den Kontrast selektiv in Richtung der Fahrerposition zu reduzieren und gleichzeitig die Leuchtdichte und das Kontrastlevel in der Beifahrerposition beizubehalten.

Ein Display gemäß einem Ausführungsbeispiel der Erfindung nutzt die In-Plane-Switching (IPS-)Technologie und weist u.a. die folgenden Elemente auf:
- LCD-TFT-Glas
- LCD-Farbfilterglas
- Flüssigkristall
- Ausrichtungsschicht
- elektronische Ansteuerung (IC-Ansteuerung, Routing, TFT, Gate on Panel)

Weitere Komponenten wie beispielsweise ein Touch-Panel und eine Hinterleuchtungseinheit sowie gegebenenfalls in die Anzeigevorrichtung integrierte Näherungssensorik mit gegebenenfalls Gestenerkennung können ebenfalls vorhanden sein, spielen aber im Zusammenhang mit der Erfindung grundsätzlich keine Rolle. Auch die typischerweise vorhandenen Polarisationsfilter werden im Folgenden nicht weiter thematisiert, da sie für die Erfindung nicht von Bedeutung sind.

Das Farbfilterglas und die IC-Ansteuerung sind herkömmlicher Arten und können entsprechend den Funktionalitäten und der Leistung, die von dem Display erreicht werden soll, ausgewählt werden. Die Farbskala kann beispielsweise per Farbfilter eingestellt werden. Ferner kann ein In-Cell-IC-Ansteuerungstyp und/oder ein separates Touchpanel implementiert werden.

IPS-Displays zeichnen sich unter anderem durch weite Betrachtungswinkel und eine optimale Farbdarstellung mit sehr hoher Bildqualität aus. Das standardmäßige Pixeldesign vom IPS-Typ weist einen Thin-FilmTransistor (TFT) auf. Das Videosignal (Spannungspegel) wird an die Elektrode des Pixels angelegt, um einen Spannungspegel auf dem Pixel zu erzeugen. Die Spannungsdifferenz zwischen Masse (Vcom) und dem Spannungspegel auf dem Gitter definiert dann den Gesamtspannungspegel (elektrisches Feld) im Flüssigkristall, um eine definierte und gut kontrollierte Graustufe zu erzeugen.

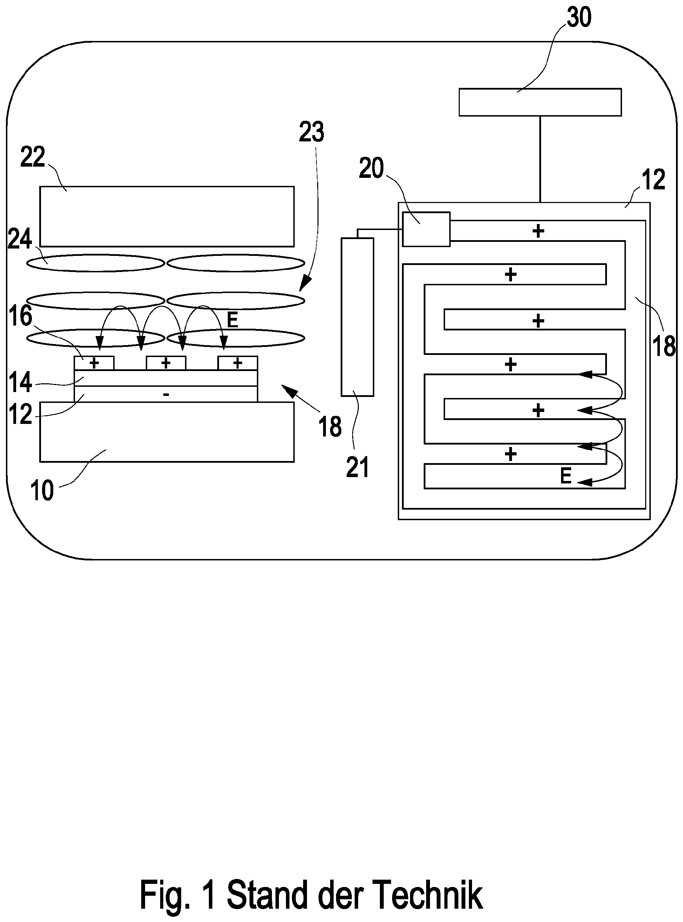

Fig. 1 zeigt diese Situation. Hierbei kann das Elektrodendesign in Form von Multi-Domain (V-förmig, zwei Domains, Zick-Zack etc.), also mit mehreren Elektrodenflächen pro Pixel, deren Geometrie und Anzahl je nach Design unterschiedlich sein können, ausgeführt sein, um symmetrische Eigenschaften in Bezug auf Übersetzungs- und Kontrastverhältnis zu erreichen, und ebenso, um ein niedriges Farbverschiebungslevel zu erzielen.

Das standardmäßige Pixeldesign der Fig. 1 in IPS-Technologie weist in herkömmlicher Weise ein TFT-Panel 10 auf, auf dem pro Pixel eine Masseelektrode bzw. Masse-Elektrodenfläche 12 angeordnet ist (liegt über die Ansteuerungseinheit 30 auf Masse). Durch eine elektrisch isolierende Isolationsschicht 14 getrennt von der Masse-Elektrodenfläche 12 befinden sich die "Finger" 16 einer einzigen Elektrode 18, die über einen TFT-Transistor 20 angesteuert wird (siehe die Ansteuerungseinheit 21). Oberhalb des TFT-Panels 10 und im Abstand zu diesem befindet sich das Deckglas 22 des LCD-Displays 23, wobei sich die Flüssigkristalle 24 zwischen dem TFT-Panel 10 und dem Deckglas 22 befinden.

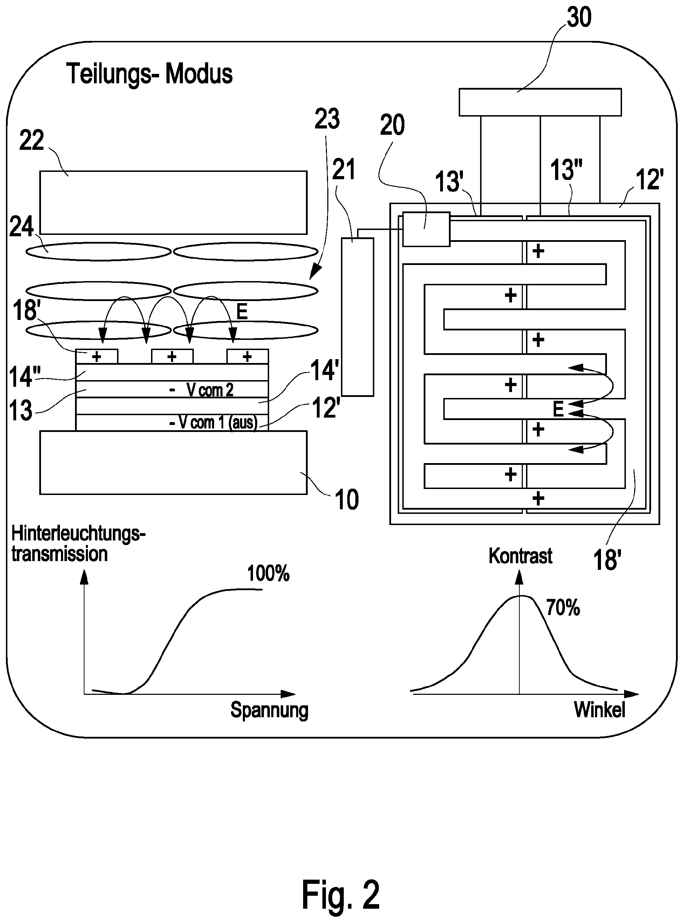

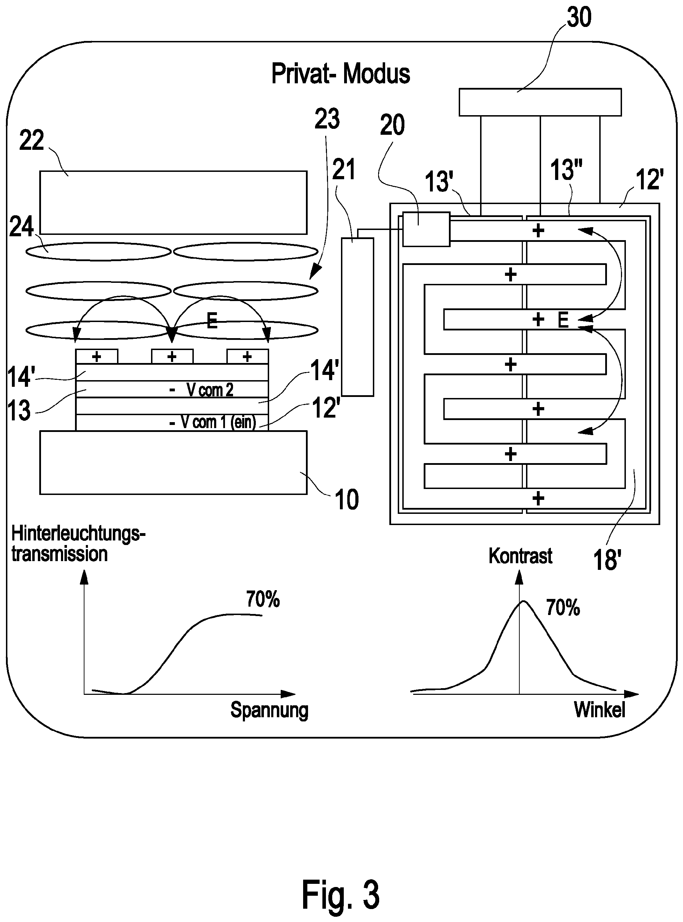

Bei dem erfindungsgemäßen Ausführungsbeispiel eines LCD-Displays 23 (Fign. 2 und 3) weist das Pixeldesign einen einzelnen TFT 20 mit einem Ein-Gitter-Multi-Domain-Elektrodendesign (wie bei dem IPS-Standard-Design) auf. Das Vcom-Elektrodendesign (Masseelektrode bzw. Masse-Elektrodenfläche) ist jedoch um eine zweite Vcom-Elektrodenfläche erweitert. Die zweite Vcom2-Elektrode ist auf der Standard-Vcom1 platziert, wobei sich zwischen beiden eine Isolationsschicht befindet. Vcom2 kann eine Single Domain oder Dual Domain sein, um eine selektive Vcom-Ansteuerung in asymmetrischer Richtung zu integrieren. Vcom1 und Vcom2 können dann so abgestimmt werden, dass sie ein elektrisches Gesamtfeld erzeugen, das für den Betrieb im Teilungs-Modus der IPS-ähnlichen Ansteuerung ähnelt (Fig. 2) und für den Betrieb im Privat-Modus eine selektive Asymmetrie einführt (Fig. 3). Diese Asymmetrie in der elektrischen Ansteuerung führt zu einer Asymmetrie in der Kontrast- und Luminanzleistung über den Blickwinkel des Pixels. Hierbei kann die Elektrodenform des Pixels so optimiert werden, dass der minimale Kontrast an der Fahrerposition erreicht wird.

In Fig. 2 ist das Pixeldesign bei Betrieb im Teilungs-Modus gezeigt. Das Masseelektrodendesign umfasst eine erste Masseelektrodenfläche 12' auf der durch eine Isolationsschicht 14' getrennt eine zweite Masseelektrodenfläche 13 angeordnet ist, auf der wiederum, ebenfalls durch eine Isolationsschicht 14" getrennt die Plus-Elektrode 18' angeordnet ist, die eine Kammstruktur aufweist und nicht unterteilt ist. Diese dritte Elektrode 18' gleich in ihrem Design dem Design der Plus-Elektrode des Standard-IPS-Pixels. Die zweite Masseelektrodenfläche 13 ist in zwei Masseelektrodenteilflächen 13', 13" unterteilt. Durch wahlweise Ansteuerung (siehe die weitere Ansteuerungeinheit 30) beider oder einer der beiden Masseelektrodenteilflächen 13', 13" neben der ersten Masseelektrodenfläche 12 (bei gleichzeitiger Ansteuerung der dritten Elektrode 18') wird das elektrische Feld für die Flüssigkristalle 24 innerhalb des Pixels beeinflusst, und zwar sowohl hinsichtlich seiner Stärke als auch hinsichtlich seiner Homogenität (Symmetrie, Asymmetrie), wie oben beschrieben, um zwischen dem Teilungs-Modus und dem Privat-Modus (siehe Fig. 3) umschalten zu können.

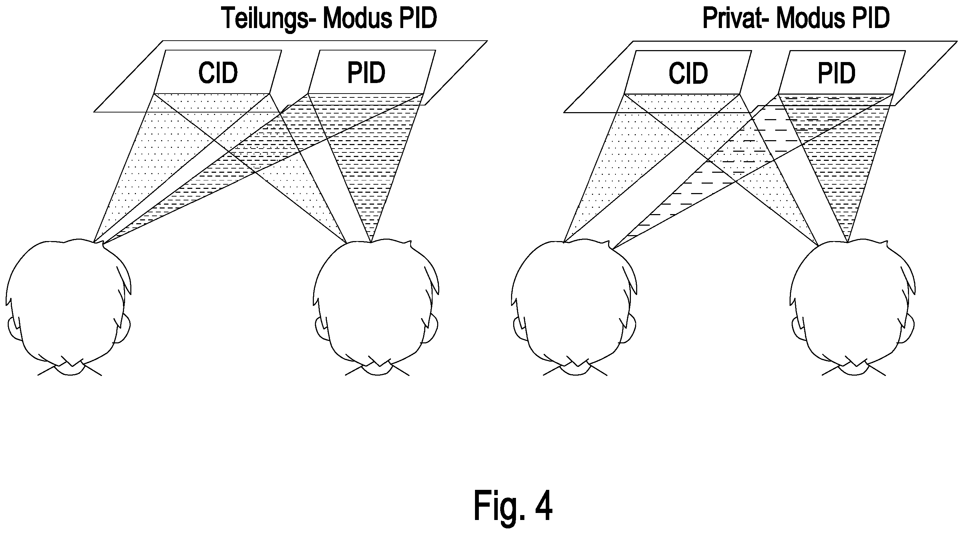

Die Asymmetrie durch die Masseelektrodenteilflächen 13', 13" geteilte Vcom2-Masseelektrodenfläche des Pixels führt zu einem abgestimmten asymmetrischen Kontrastverhältnis. Der minimale Kontrast kann auf der horizontalen Achse erreicht und auf die Fahrerposition abgestimmt werden. Hierbei werden im Teilungs-Modus IPS-ähnliche Eigenschaften erreicht, während im Privat-Modus der asymmetrische verringerte Kontrast die Sichtbarkeit des Bildes aus der Position neben dem Display PID, z.B. aus der Fahrerposition reduziert, für den frontal vor dem Display PID befindlichen Betrachter (z.B. Beifahrer) aber weitaus ausreichend ist (siehe die Gegenüberstellung in Fig. 4 mit dem CID-Display zwischen Fahrer und Beifahrer und dem PID-Display vor dem Beifahrer).

Das Pixeldesign ist kompatibel mit dem Standard-TFT-Fertigungsprozess von Displays im Automobilbereich und auch kompatibel mit dem für die In-Cell-Technologie standardisierten segmentierten Vcom-Design.

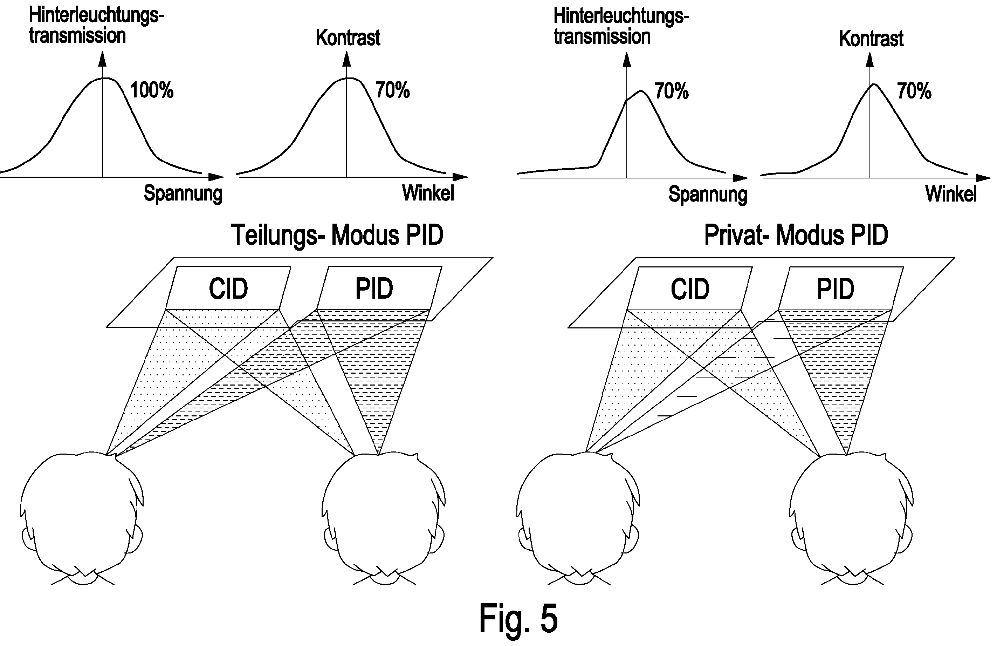

Durch die Kombination des Leuchtdichteprofils einer ebenfalls zwischen Privat-Modus und Teilungs-Modus umschaltbaren Hinterleuchtungseinheit, wie z. B. in WO-A-2023/232969 beschrieben, mit dem erfindungsgemäß zwischen Privat-Modus und Teilungs-Modus umschaltbaren Profil des Kontrasts und der Blickwinkeleinschränkung auf Pixelebene können die Anforderungen an den Sichtschutzgrad im Automobilbereich erfüllt werden, die aus der Sichtbarkeit des Bildes und der Verringerung des Ablenkungsgrades bestehen. Dies zeigt die Gegenüberstellung in Fig. 5.

Bei Displays mit schaltbarer Sichtschutzfunktion zum Wechseln zwischen Teilungs-Modus und Privat-Modus, wie nach der Erfindung vorgesehen, kann diese Umschaltung sowohl manuell als auch automatisch erfolgen. Bei Automobil-Anwendungen bietet sich eine automatische Umschaltung vom Teilungs-Modus in den Privat-Modus dann an, wenn beispielsweise durch eine den Fahrer beobachtende Kamera erkannt wird, dass der Fahrer in Richtung Beifahrerdisplay oder Beifahrerdisplaybereich blickt (Eyetracking). Es böte sich in derartigen Fällen aber auch an, auf den Privat-Modus automatisch dann umzuschalten, wenn auf dem Beifahrerdisplay bzw. Beifahrerdisplaybereich "bewegte Bilder" gezeigt werden. Es existieren also verschiedene Ansätze für die automatische Umschaltung von Teilungs-Modus in Privat-Modus. Entsprechend erfolgt dann auch die Zurücksetzung in den Teilungs-Modus automatisch. Die automatische Umschaltung in den Privat-Modus kann bei Fahrzeugen mit Sitzbelegungserkennung dann entfallen, wenn keine Beifahrersitzbelegung detektiert wird.

Das erfindungsgemäße Konzept lässt sich auch mit nicht-schaltbaren Sichtschutzfunktionen (permanenter Privat-Modus) kombinieren, was jedoch nicht gemäß dem beanspruchten Gegenstand ist. Ein Beispiel für ein derartiges Sichtschutzkonzept ist in WO-A-2023/057551 beschrieben.

### BEZUGSZEICHENLISTE

- 10: TFT-Panel
- 12: Masseelektrodenfläche
- 12': erste Masseelektrodenfläche
- 13: Masseelektrodenfläche
- 13': Masseelektrodenteilflächen
- 13": Masseelektrodenteilflächen
- 14: elektrisch isolierende Isolationsschicht
- 14': Isolationsschicht
- 14": Isolationsschicht
- 16: Finger einer Elektrode
- 18: Elektrode
- 18': dritte Elektrode
- 20: TFT-Transistor
- 21: Ansteuerungseinheit für TFT
- 22: Deckglas
- 23: LCD-Display
- 24: Flüssigkristalle
- 30: Ansteuereinheit (für Vcom1 und Vcom2)

## Patentansprüche

1. Anzeigevorrichtung, insbesondere für ein Fahrzeug, mit
- einem eine Vielzahl von Pixeln aufweisenden LCD-Display mit einer transparenten Trägerschicht (10), auf der pro Pixel eine Gruppe von Elektroden (12', 13', 13", 18') und ferner elektronische Bauteile zur Ansteuerung der Elektroden (12', 13', 13", 18') angeordnet sind, einer eine Anzeigefläche bildenden transparenten Abdeckschicht (22) und mit einer Flüssigkristallschicht (24) zwischen der Trägerschicht (10) und der Abdeckschicht (22),
- wobei jede Gruppe von Elektroden (12', 13', 13", 18') eine mit einem Massepotential verbindbare erste Elektrodenfläche (12') und zwei ebenfalls mit dem Massepotential verbindbare zweite Elektrodenflächen (13', 13") aufweist, die voneinander sowie gegenüber der ersten Elektrodenfläche (12') elektrisch isoliert und nebeneinander sowie gemeinsam fluchtend mit der ersten Elektrodenfläche (12') oberhalb oder unterhalb dieser angeordnet sind,
- wobei jede Gruppe von Elektroden (12', 13', 13", 18') eine dritte Elektrode (18') aufweist, die elektrisch isoliert von den ersten und zweiten Elektrodenflächen (12', 13', 13") angeordnet und mit einem Betriebspotential verbindbar ist, und
- einer unter anderem die elektronischen Bauteile aufweisenden Ansteuereinheit zum Verbinden der dritten Elektrode (18') jedes Pixels oder ausgewählter Pixel mit dem Betriebspotential und zum Verbinden der ersten Elektrodenflächen (12') jedes Pixels oder ausgewählter Pixel mit dem Massepotential in einem Teilungs-Modus sowie zum Verbinden der ersten Elektrodenfläche (12') und zusätzlich einer der beiden zweiten Elektrodenflächen (13', 13") jedes Pixels oder ausgewählter Pixel mit dem Massepotential in einem Privat-Modus,
- womit auf der Anzeigefläche des LCD-Displays angezeigte Information bei Betrachtung der Anzeigefläche aus einer Blickrichtung, die einer der beiden zweiten Elektrodenflächen (13', 13") sämtlicher Pixel zugewandt ist, im Teilungs-Modus kontrastreicher sichtbar ist als im Privat-Modus, in dem die der besagten Blickrichtung abgewandte eine der beiden zweiten Elektrodenflächen (13', 13") jedes Pixels oder ausgewählter Pixel mit dem Massepotential verbunden ist.

## Claims

1. A display device, in particular for a vehicle, comprising
- an LCD display having a plurality of pixels with a transparent carrier layer (10) on which a group of electrodes (12', 13', 13", 18') and also electronic components for actuating the electrodes (12', 13', 13", 18') are arranged per pixel, a transparent cover layer (22) forming a display surface, and a liquid crystal layer (24) between the carrier layer (10) and the cover layer (22),
- wherein each group of electrodes (12', 13', 13", 18') comprises a first electrode surface (12') that can be connected to a ground potential and two second electrode surfaces (13', 13") that can also be connected to the ground potential, are electrically insulated from one another and from the first electrode surface (12'), and are arranged above or below the first electrode surface (12') such that they are together aligned therewith,
- wherein each group of electrodes (12', 13', 13", 18') comprises a third electrode (18'), which is arranged to be electrically insulated from the first and second electrode surfaces (12', 13', 13") and can be connected to an operating potential, and
- an control unit, which comprises the electronic components, inter alia, for connecting the third electrode (18') of each pixel or selected pixels to the operating potential and for connecting the first electrode surfaces (12') of each pixel or selected pixels to the ground potential in a sharing mode and for connecting the first electrode surface (12') and additionally one of the two second electrode surfaces (13', 13") of each pixel or selected pixels to the ground potential in a private mode,
- as a result of which information displayed on the display surface of the LCD display, when looking at the display surface from a viewing direction facing one of the two second electrode surfaces (13', 13") of all the pixels, is visible in greater contrast in sharing mode than in private mode, in which the one of the two second electrode surfaces (13', 13") of each pixel or selected pixels which faces away from said viewing direction is connected to the ground potential.

## Revendications

1. Dispositif d'affichage, en particulier pour véhicule, avec
- un écran LCD comportant plusieurs pixels avec une couche de support transparente (10) sur laquelle sont disposés, par pixel, un groupe d'électrodes (12', 13', 13", 18') et en outre des composants électroniques pour la commande des électrodes (12', 13', 13", 18'), une couche de recouvrement transparente (22) formant une surface d'affichage et avec une couche de cristaux liquides (24) entre la couche de support (10) et la couche de recouvrement (22),
- dans lequel chaque groupe d'électrodes (12', 13', 13", 18') comporte une première surface d'électrode (12') qui peut être reliée à un potentiel de masse et deux deuxièmes surfaces d'électrode (13', 13") qui peuvent aussi être reliées au potentiel de masse, qui sont disposées en étant isolées électriquement l'une de l'autre et de la première surface d'électrode (12') et l'une à côté de l'autre et alignées ensemble avec la première surface d'électrode (12') au-dessus ou en dessous de celle-ci,
- dans lequel chaque groupe d'électrodes (12', 13', 13", 18') comporte une troisième électrode (18') qui est disposée en étant isolée électriquement des première et deuxième surfaces d'électrodes (12', 13', 13") et qui peut être reliée à un potentiel de fonctionnement, et
- une unité de commande comportant notamment les composants électroniques pour relier la troisième électrode (18') de chaque pixel, ou de pixels sélectionnés, au potentiel de fonctionnement et pour relier les premières surfaces d'électrodes (12') de chaque pixel, ou de pixels sélectionnés, au potentiel de masse dans un mode partagé et pour relier la première surface d'électrode (12') et en outre l'une des deux deuxièmes surfaces d'électrode (13', 13") de chaque pixel, ou de pixels sélectionnés, au potentiel de masse dans un mode privé,
- de sorte que les informations affichées sur la surface d'affichage de l'écran LCD sont visibles avec un contraste plus élevé lors de l'observation de la surface d'affichage depuis une direction de visualisation qui est orientée vers l'une des deux deuxièmes surfaces d'électrode (13', 13") de tous les pixels, dans le mode partagé que dans le mode privé, par le fait que l'une des deux deuxièmes surfaces d'électrode (13', 13") de chaque pixel, ou de pixels sélectionnés, qui est opposée à ladite direction de visualisation, est reliée au potentiel de masse.
